# FASCICULE DE BREVET EUROPEEN

(11) **EP 1 229 757 B1**
(45) Date de publication et mention de la délivrance du brevet: **12.08.2009**
(21) Numéro de dépôt: 02290269.6
(22) Date de dépôt: 05.02.2002
(51) Int. Cl.: H04W 8/26

(54) **Procédé d'initialisation d'un radiotéléphone mobile**
Initialisierungsverfahren für ein Mobilfunktelefon
Procedure of initialisation of a mobile radiotelephone

(30) Priorité: 06.02.2001 FR 0101562
(43) Date de publication de la demande: 07.08.2002
(73) Titulaire: Sagem Mobiles, 75015 Paris (FR)
(72) Inventeur: Vermande, Michel, 95770 Montreuil sur Epte (FR)
(74) Mandataire: Bloch, Gérard

(56) Documents cités:
- GB-A- 2 308 277
- US-A- 5 603 084

## Description

La présente invention concerne la mise en service des radiotéléphones mobiles.

Un procédé d'initialisation d'un radiotéléphone mobile est généralement connu du document US-A-5 603 084**.**

Lorsqu'un utilisateur achète un téléphone mobile chez un distributeur, il peut souscrire un abonnement à un réseau cellulaire ; on peut aussi lui communiquer diverses données d'adresses ou paramètres de connexion lui permettant d'appeler divers serveurs tels que des portails Internet WAP, de déterminer le type des connexions et leur niveau de sécurisation.

La saisie de ces données représente une tâche fastidieuse puisque l'utilisateur ne maîtrise pas encore parfaitement le fonctionnement de son terminal téléphonique.

La présente invention vise à simplifier la procédure de mise en service d'un radiotéléphone.

A cet effet, l'invention concerne un procédé d'initialisation d'un radiotéléphone mobile, dans lequel :
- ayant stocké, dans une base de données d'un serveur relié à un réseau de transmission de données, un numéro d'identification du radiotéléphone et l'y ayant associé à un identifiant d'une table de paramètres de connexion à des services informatiques proposés par un distributeur du radiotéléphone,
- on se relie au réseau et on appelle le serveur pour lire la table de paramètres, en l'adressant indirectement, par le numéro d'identification, à travers l'identifiant de la table, et les paramètres de connexion lus sont stockés dans le radiotéléphone.

Ainsi, le radiotéléphone est automatiquement configuré selon l'offre commerciale du revendeur particulier.

Avantageusement, les paramètres de connexion sont transmis par un service de messages courts.

La mise en service du radiotéléphone est ainsi effectuée sans nécessité d'une commande explicite à cet effet.

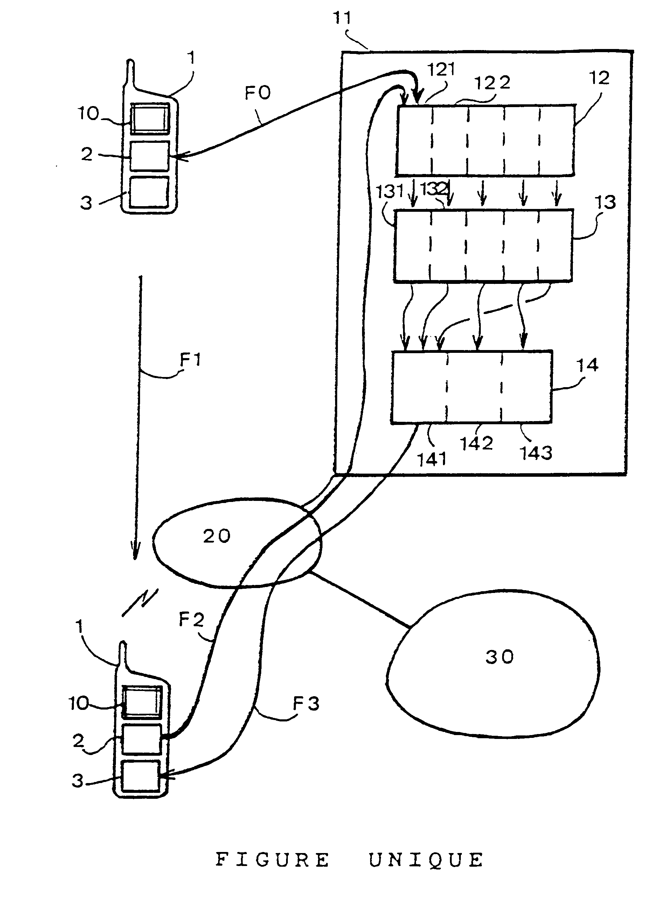

L'invention sera mieux comprise à l'aide de la description suivante d'un mode de mise en oeuvre préféré du procédé de l'invention, en référence à la figure unique annexée, qui représente schématiquement un radiotéléphone et un serveur à base de données pour le configurer.

Le terminal de radiotéléphonie, ou radiotéléphone mobile, référencé 1, est représenté deux fois, et, précisément, lorsqu'il est en cours ou fin de fabrication en usine, en partie haute de la figure, et lorsqu'il a été livré (flèche F1) chez un distributeur.

La référence 11 désigne un serveur à base de données, géré par le fabricant des radiotéléphones 1, situé ou non dans ses locaux et accessible à travers tout réseau permettant la transmission de données. Le serveur 11 peut par exemple être un portail Internet WAP, donc accessible à partir d'un terminal de traitement de données relié à l'Internet 30, à travers éventuellement le réseau téléphonique commuté RTC ou encore, dans le cas de la figure, un réseau de radiotéléphonie, comme par exemple le réseau GSM référencé 20.

Le radiotéléphone 1, comportant un microprocesseur séquenceur d'unité centrale 10, reçoit, en fabrication, dans une mémoire non effaçable 2, un numéro dit IMEI (numéro d'Identification International de Mobile). Le numéro IMEI est aussi gardé (flèche F0) en mémoire dans une position mémoire 121, 122, etc. d'une zone 12 de la base de données du serveur 11.

Le radiotéléphone 1 est ensuite livré (flèche F1) à un distributeur et attribué à un utilisateur qui s'abonne à un réseau de radiotéléphonie, ici le réseau GSM 20, relié à l'Internet 30.

Il convient alors de stocker, dans le radiotéléphone 1, des paramètres de connexion à des services ou serveurs informatiques, tels que portails WAP ou autres, que propose le distributeur considéré. Toutefois, les divers distributeurs ne proposent pas tous la même liste de services.

De ce fait, lors de la livraison à chaque distributeur d'un radiotéléphone 1, on associe, à l'identifiant IMEI de la zone 12, un identifiant du distributeur considéré, dans une position mémoire 131, 132 etc., d'une zone associée 13 (flèches verticales). On apparie ainsi le radiotéléphone 1 et le distributeur. La base de données du serveur 11 contient en outre une zone 14 comportant, pour les divers distributeurs, les paramètres de connexion permettant d'accéder aux services qu'ils proposent respectivement.

En d'autres termes, le contenu des zones 12, 13 constitue des liens logiques qui permettent, à partir d'un numéro IMEI d'une position mémoire 121, 122, d'adresser ou pointer indirectement, à travers la position mémoire 131, 132 associée, une sous-zone ou table particulière 141, 142, 143 contenant un spectre particulier de paramètres de connexion, comme l'illustrent les flèches descendantes avec brassage allant des positions mémoires 131, 132 et suivantes aux tables 141, 142, 143.

Les positions mémoires de la zone 13 sont donc en fait, fondamentalement, des identifiants des diverses tables 141, 142, 143, descriptives des spectres correspondants de services offerts, c'est-à-dire que l'identification explicite du revendeur est superflue : ce dernier n'intervient que par ses caractéristiques d'offre de service définies par l'une des tables 141, 142, 143.

Pour la mise en service du radiotéléphone 1 par initialisation de celui-ci, l'utilisateur du terminal 1, ou un vendeur du distributeur, appelle le serveur 11 et lui transmet l'identifiant IMEI (flèche F2) pour adresser indirectement en lecture la table 141, 142, 143 du distributeur, à travers l'identifiant 131, 132 de cette table 141, 142, 143. Les paramètres de connexion reçus (flèche F3) en retour du serveur 11 sont stockés dans une mémoire 3 du radiotéléphone 1 comme évoqué plus haut. Les échanges de données ci-dessus avec le serveur 11 peuvent, d'une façon générale, être effectués à travers un réseau quelconque de transmission de données et au moyen de tout équipement de transmission de données, y compris comme ici le radiotéléphone 1. Dans le cas de la figure, le réseau d'accès au serveur 11 est aussi le réseau 20 d'utilisation du radiotéléphone 1.

Dans un autre cas, pour lequel le serveur 11 serait directement relié à l'Internet 30, un ordinateur relié à ce dernier pourrait de même interroger le serveur 11. Les paramètres de réponse du serveur 11 pourraient alors être reçus par l'ordinateur considéré et transférés dans le radiotéléphone 1, par exemple par une liaison informatique, Bluetooth ou autre, ou par transfert d'un support mémoire comme par exemple une carte SIM. En variante, les paramètres pourraient être directement reçus par le radiotéléphone 1 à travers le réseau GSM 20 si, comme ici, le serveur 11 y est relié et a préalablement reçu, de l'ordinateur, le numéro de téléphone du terminal 1 à appeler en retour.

Les paramètres de connexion définissent par exemple le numéro de téléphone d'un fournisseur de service d'accès à l'Internet 30, des mots de code d'accès et des mots de passe, une adresse IP de passerelleWAP, une adresse URL ou page d'accueil par défaut, un mode analogique ou numérique de transmission ou encore un mode de sécurisation.

Lorsque le terminal émet son identifiant IMEI, il fournit également un mot de passe qui sera retransmis avec la réponse du serveur. Avant de charger effectivement en mémoire les paramètres reçus, le terminal demande à l'utilisateur de fournir à nouveau le mot de passe. Si ces deux mots de passe sont les mêmes, la mise à jour est possible. Les paramètres de connexion peuvent en particulier être transmis par un ou des messages courts SMS du réseau GSM 20, reçus et reconnus comme étant des messages reçus et mémorisés dans la mémoire 3.

Selon une exploitation particulière, l'appel vers le serveur 11 et la configuration automatique du radiotéléphone 1 expliquée ci-dessus s'effectuent automatiquement lorsque l'utilisateur veut se connecter à un réseau informatique comme l'Internet 30.

Le processeur 10 du radiotéléphone 1 détecte à cet effet une commande correspondante, par exemple l'activation d'une touche Internet @, et lit alors la mémoire 3 prévue pour contenir les paramètres téléchargés depuis le serveur 11. Si le processeur 10 constate que la mémoire 3 est vide, et qu'il s'agit donc d'un premier appel vers l'Internet 30, il lance un appel vers le serveur 11, dont le numéro d'appel a été stocké dans le radiotéléphone 1, avec un message contenant l'identifiant IMEI local, ou le lisant en mémoire 2 pour le transmettre, et les données de paramètres en retour sont alors stockées dans la mémoire 3.

Cette exploitation est ainsi totalement transparente vis-à-vis de l'utilisateur et la connexion à l'Internet 30 qu'il a commandée est ensuite établie.

Par ailleurs, et indépendamment de la manière selon laquelle on accède au serveur 11, il peut être prévu que celui-ci réponde à un appel en fournissant d'abord une liste des services correspondant aux paramètres contenus dans la table 141, 142, 143 adressée, s'affichant sur un écran du terminal 1.

L'utilisateur du radiotéléphone 1 sélectionne alors tout ou partie des services proposés et transmet cette sélection au serveur 11 qui émet ensuite en retour les paramètres de connexion des services sélectionnés.

## Revendications

1. Procédé d'initialisation d'un radiotéléphone mobile (1), dans lequel :
- ayant stocké, dans une base de données d'un serveur (11) relié à un réseau de transmission de données (20, 30), un numéro (IMEI, 121) d'identification du radiotéléphone (1) et l'y ayant associé à un identifiant (131) d'une table (141) de paramètres de connexion à des services informatiques proposés par un distributeur du radiotéléphone (1),
- on se relie au réseau (20, 30) et on appelle le serveur (11) pour lire la table de paramètres (141), en l'adressant indirectement, par le numéro d'identification (IMEI), à travers l'identifiant (131) de la table (141), et les paramètres de connexion lus sont stockés dans le radiotéléphone (1).

2. Procédé selon la revendication 1, dans lequel les paramètres de connexion sont transmis directement au radiotéléphone (1).

3. Procédé selon la revendication 2, dans lequel les paramètres de connexion sont transmis par un service de messages courts (SMS).

4. Procédé selon l'une des revendications 2 et 3, dans lequel, ayant stocké dans le radiotéléphone (1) un message d'appel du serveur (11), message transmettant le numéro d'identification (IMEI), on détecte une commande d'un premier appel vers un réseau informatique (30) et on émet le message pour recevoir en retour les paramètres de connexion.

5. Procédé selon la revendication 1, dans lequel on appelle et lit le serveur (11) à partir d'un terminal d'un réseau informatique (30) et on transfère les paramètres lus au radiotéléphone (1).

6. Procédé selon l'une des revendications 1 à 5, dans lequel le serveur appelé (11) fournit d'abord une liste des services de la table (141) et fournit ensuite des paramètres de connexion de services que l'utilisateur du radiotéléphone (1) a préalablement sélectionnés.

7. Procédé selon l'une des revendications 1 à 6, dans lequel, à l'émission du numéro d'identification (IMEI), il est également fourni un mot de passe retransmis avec la réponse du serveur (11).

8. Procédé selon la revendication 7, dans lequel, avant stockage des paramètres, le mot de passe est fourni à nouveau.

## Claims

1. Method for initializing a mobile telephone (1), wherein:
- an identification number (IMEI, 121) of the mobile telephone (1) is stored in a database of a server (11) connected to a data transmission network (20, 30) and is associated with an identifier (131) of a table (141) of parameters for connection to computer departments offered by a supplier of the mobile telephone (1),
- a connection is made to the network (20, 30) and the server (11) is called to read the table of parameters (141), by indirectly adressing it, by the identification number (IMEI), through the identifier (131) of the table (141), and the connection parameters read are stored in the mobile telephone (1).

2. Method according to claim 1, wherein the connection parameters are directly transmitted to the mobile telephone (1).

3. Method according to claim 2, wherein the connection parameters are transmitted through a short message service (SMS).

4. Method according to any of claims 2 and 3, wherein, a message for calling the server (11) being stored in the mobile telephone (1), which message transmits the identification number (IMEI), an order is detected for a first call to a computer network (30) and the message is emitted to receive back the connection parameters.

5. Method according to claim 1, wherein the server (11) is called and read from a terminal of the computer network (30) and the read parameters are forwarded to the mobile telephone (1).

6. Method according to any of claims 1 to 5, wherein the called server (11) first provides a list of services of the table (141) and then provides connection parameters of services which the user of the mobile telephone (1) has selected beforehand.

7. Method according to any of claims 1 to 6, wherein, upon emitting the identification number (IMEI), a password retransmitted with the answer from the server (11) is also provided.

8. Method according to claim 7, wherein, before the parameters are stored, the password is provided again.

## Patentansprüche

1. Verfahren zur Initialisierung eines Mobilfunktelefons (1), wobei:
- nachdem in einer Datenbank eines Servers (11), der an ein Datenübertragungsnetz (20, 30) angeschlossen ist, eine Identifikationsnummer (IMEI, 121) des Funktelefons (1) gespeichert wurde, und dort mit einem Identifizierer (131) einer Tabelle (141) mit Parametern zum Verbinden mit Computerdiensten, die von einem Vertreiber des Funktelefons (1) angeboten werden, verknüpft wurde,
- eine Anbindung an das Netz (20, 30) stattfindet und der Server (11) angerufen wird, um die Parametertabelle (141) auszulesen, indem er sie über die Identifikationsnummer (IMEI) anhand des Identifizierers (131) der Tabelle (141) indirekt adressiert, und die ausgelesenen Verbindungsparameter in dem Funktelefon (1) gespeichert werden.

2. Verfahren nach Anspruch 1, wobei die Verbindungsparameter direkt an das Funktelefon (1) übertragen werden.

3. Verfahren nach Anspruch 2, wobei die Verbindungsparameter durch einen Kurznachrichtendienst (SMS) übertragen werden.

4. Verfahren nach einem der Ansprüche 2 und 3, wobei, nachdem in dem Funktelefon (1) eine Nachricht eines Anrufs des Servers (11) gespeichert wurde, wobei diese Nachricht die Identifikationsnummer (IMEI) überträgt, ein Befehl eines ersten Anrufs an ein Computernetz (30) erfasst wird und die Nachricht gesendet wird, um daraufhin die Verbindungsparameter zu empfangen.

5. Verfahren nach Anspruch 1, wobei der Server (11) von einem Endgerät eines Computernetzes (30) angerufen und ausgelesen wird und die ausgelesenen Parameter an das Funktelefon (1) übertragen werden.

6. Verfahren nach einem der Ansprüche 1 bis 5, wobei der angerufene Server (11) zunächst eine Liste der Dienste der Tabelle (141) bereitstellt und dann Dienstverbindungsparameter bereitstellt, die der Benutzer des Funktelefons (1) zuvor ausgewählt hat.

7. Verfahren nach einem der Ansprüche 1 bis 6, wobei bei der Sendung der Identifikationsnummer (IMEI) auch ein Passwort bereitgestellt wird, das mit der Antwort des Servers (11) übermittelt wird.

8. Verfahren nach Anspruch 7, wobei vor dem Speichern der Parameter das Passwort erneut bereitgestellt wird.
